(19) Europäisches Patentamt
European Patent Office
Office européen des brevets

(11) **EP 0 761 281 A1**

(12) **EUROPÄISCHE PATENTANMELDUNG**

(43) Veröffentlichungstag:
12.03.1997 Patentblatt 1997/11

(51) Int. Cl.$^6$: **B01D 53/00**, F25J 1/02,
F23L 7/00

(21) Anmeldenummer: 96112406.2

(22) Anmeldetag: 01.08.1996

(84) Benannte Vertragsstaaten:
**AT BE DE ES FR GB IT NL SE**

(30) Priorität: **29.08.1995 DE 19531842**

(71) Anmelder:
• **MESSER GRIESHEIM GMBH**
  **D-60547 Frankfurt (DE)**
• **SBW SONDERABFALLENTSORGUNG BADEN-WÜRTTEMBERG GmbH**
  **D-70136 Fellbach (DE)**

(72) Erfinder:
• **März, Herbert**
  **D-71686 Remseck (DE)**
• **Hatami, Rasi, Dr.**
  **41564 Kaarst (DE)**
• **Träger, Dieter**
  **72770 Reutlingen (DE)**

(54) **Verfahren zur Verringerung von Rauchgas bei Verbrennungsprozessen**

(57) Die Erfindung betrifft ein Verfahren zur Verringerung von Rauchgas bei Verbrennungsprozessen, die mit einem oxidierbaren Verbrennungsgas durchgeführt werden, welches aus im Kreislauf (16) rückgeführtem Rauchgas und technisch erzeugtem Sauerstoff gebildet wird. Ein dem Verbrennungsgas nicht zugeführter, stöchiometrisch bedingter Anteil des Rauchgases weist einen $CO_2$-Anteil von größer 70 % auf. Zur Reduzierung des Rauchgases wird der nicht als Verbrennungsgas zur Verbrennung rückgeführte Anteil des Rauchgases dem Kreislauf (16) entnommen und in der Einrichtung (18) verflüssigt.

Fig. 1

EP 0 761 281 A1

## Beschreibung

Die Erfindung betrifft ein Verfahren zur Verringerung von Rauchgas bei Verbrennungsprozessen nach dem Oberbegriff des Anspruches 1.

Bei Verbrennungsprozessen wie z. B. in Hausmüll- und Sondermüllverbrennungsanlagen oder Kraftwerks- und Industrieanlagen werden jährlich Rauchgasmengen in gewaltiger Größenordnung freigesetzt.

Aufgrund der global zu beobachtenden klimatischen Veränderungen werden weltweit große Anstrengungen unternommen, die bei Verbrennungsprozessen zwangsläufig entstehenden Schadstoffanteile im Rauchgas mit unterschiedlichen Verfahrensmethoden zu begegnen.

Dabei unterscheidet man bei Verbrennungsprozessen zwischen Primär- und Sekundärmaßnahmen zur Verhinderung von Schadstoffen. Von größter Bedeutung eines Verbrennungsprozesses ist dabei das zum Einsatz gelangende Verbrennungsmedium.

In Abhängigkeit von dem Verbrennungsmedium kann festgelegt werden, ob die gesetzlich vorgeschriebenen Werte der TA Luft bzw. der 17. BImschV allein mit Primärmaßnahmen und/oder zusätzlichen Sekundärmaßnahmen eingehalten werden können.

So können beispielsweise bei einem Gasturbinenkraftwerk mit Erdgas befeuert Primärmaßnahmen, wie z. B. der Einsatz von Hybrid-Brennern, völlig ausreichen, um die vorgeschriebenen Grenzwerte nicht nur einzuhalten, sondern sogar zu unterschreiten. Während ein z. B. mit Steinkohle befeuertes Kraftwerk bereits zu Sekundärmaßnahmen greifen muß, um die Entschwefelung, Entstaubung und Entstickung und damit die geforderten Grenzwerte einhalten zu können.

Ganz extrem verhält es sich bei heterogenen Verbrennungsprozessen insbesondere bei Haus- und Sondermüllverbrennungen.

Hier müssen eine Vielzahl von Sekundärmaßnahmen in Form einer Rauchgasreinigungsanlage bereitgestellt werden, um neben der Entschwefelung, Entstaubung und Entstickung auch die Abscheidung von Halogenverbindungen, Schwermetallen und nicht zuletzt Dioxin und Furane sicher zu stellen.

Die damit immer komplexer werdenden Anlagen haben deshalb auch schon längst die Grenze des ökonomisch vertretbaren erreicht und zum Teil überschritten.

Aus den genannten Gründen werden deshalb verstärkt Anstrengungen unternommen, den negativen Folgen von Verbrennungsprozessen mit Primärmaßnahmen zu begegnen. Dabei können die größten Anstrengungen auf dem Gebiet der Stickoxidbildung beobachtet werden. Bekannt sind derzeit sieben verschiedene Stickoxidverbindungen, wobei Stickstoffdioxid ($NO_2$) und Stickstoffmonoxid (NO) am stabilsten sind und daher im wesentlichen die Stickoxidbelastung im Rauchgas kennzeichnen.

Dabei entsteht Sickstoffmonoxid in der Hauptsache bei hinreichend langen Verweilzeiten der Verbrennungsgase im Brennraum oberhalb von 1000 °C und genügend hoher Sauerstoffkonzentration allein aus den Komponenten der Luft, ohne chemische Reaktionen mit dem Brennstoff. Da Verbrennungsluft zu 78 % aus Stickstoff und 21 % aus Sauerstoff besteht, machen die aus dem Luftstickstoff gebildeten Stickoxide den größten Teil der Schadstoffbelastung aus.

Inder DE 43 13 102 wird daher zur Verringerung der Stickoxidbildung vorgeschlagen, das für die Oxidation der Verbrennungsprodukte bzw. der Brennstoffe benötigte Verbrennungsgas aus technisch erzeugtem Sauerstoff und Rauchgas zu bilden. Das bei der Verbrennung entstehende Rauchgas wird in einem Kreislauf mit dem technisch erzeugten Sauerstoff gemischt und der Verbrennung zugeführt. Damit fallen ca. 80 % des als Substitut für den Luftstickstoff eingesetzten Rauchgases als Abgas weg. Es bleibt somit nur die Rauchgasmenge übrig, die durch die Zumischung des technischen Sauerstoffes ersetzt wird. Da die Verbrennung unter Luftabschluß stattfindet, erfolgt eine Reduzierung der Stickoxidbildung aufgrund der Verringerung des Stickstoffanteils im Verbrennungsgas.

Durch diese Maßnahme, wird eine drastische Volumenreduzierung des Rauchgases auf bis zu 20 % des bisherigen Wertes erreicht, bei gleichzeitiger Reduzierung der Stickoxidmengen.

Aufgabe der Erfindung ist es, ein Verfahren bereitzustellen, mit dem eine weitere Reduzierung des Rauchgases erreicht werden kann.

Ausgehend von dem im Oberbegriff genannten Stand der Technik ist diese Aufgabe erfindungsgemäß gelöst, mit den im kennzeichnenden Teil des Anspruches 1 angegebenen Merkmalen.

Vorteilhafte Weiterbildungen sind in den Unteransprüchen angegeben.

Durch das erfindungsgemäße Verfahren wird der Anteil des Rauchgases weiter stark, vorzugsweise bis auf Null, reduziert. Dadurch wird ein rauchgasfreier, geschlossener Verbrennungsprozeß erreicht, in dem der überwiegende Anteil des Rauchgases als Verbrennungsgas der Verbrennungseinrichtung im Kreislauf rückgeführt wird und der stöchiometrisch verbleibende Anteil des Rauchgases dem Kreislauf entnommen und verflüssigt wird. Auf einen bei üblichen Verbrennungsprozessen erforderlicher Abgaskamin kann verzichtet werden. Durch die Erfindung wird auf wirtschaftliche Weise ein hochkonzentriertes $CO_2$ verflüssigt, weil der $CO_2$-Anteil durch die Aufkonzentrierung im Rauchgaskreislauf größer/gleich 70 %, vorteilhaft größer/gleich 85 %, ist. Durch das erfindungsgemäße Verfahren wird ein zuvor die Umwelt belastendes Abgas in einen wirtschaftlich herstell- und vermarktbaren Wertstoff umgewandelt. Für den Betreiber der Verbrennungsanlage ergibt sich neben dem ökologischen Vorteil des Wegfalls von Rauchgasen die ökonomischen Vorteile der Verringerung von Kosten der Verbrennungsanlage sowie ein Erlös aus dem Verkauf des erzeugten Wertstoffes $CO_2$-flüssig.

Vorzugsweise liegt der als Verbrennungsgas genutzte, technisch erzeugte Sauerstoff mit einer Reinheit von mindestens 90 %, vorzugsweise mindestens 93 %, als tiefkalt verflüssigtes Gas vor. Vorteilhaft wird der tiefkalt verflüssigte Sauerstoff als Kältemittel zur RauchgasVerflüssigung einem Wärmetauscher zugeführt. Der für die Verflüssigung vorgesehene Anteil des Rauchgases strömt im Gleich-, Gegen- oder Kreuzstrom zu dem Kältemittel durch den Wärmetauscher. Das Kältemittel gibt dabei Kälte an das Rauchgas ab, verdampft dabei und strömt als Gas zu einem Mischer. In dem Mischer wird das für die Verbrennung erforderliche oxidierende Verbrennungsgas aus dem bei dem Verbrennungsprozeß erhaltenen Rauchgas und dem technisch erzeugten und im Wärmetauscher verdampften Sauerstoff, gemischt. Das dabei kälteaufnehmende Rauchgas wird dabei auf -25 bis -30°C abgekühlt und verflüssigt. In einem $CO_2$-Lagerbehälter wird das flüssige $CO_2$ bei Temperaturen zwischen -20 und -30 °C und Drücken zwischen 14 bis 20 bar gelagert.

Ein Ausführungsbeispiel der Erfindung ist in der Zeichnung dargestellt und wird im folgenden näher beschrieben.

Es zeigen

**Fig. 1** ein Schema des erfindungsgemäßen Verbrennungsprozesses mit der Verflüssigung des Rauchgases;

**Fig. 2** ein Schema der $CO_2$-Verflüssigung des Rauchgases mittels separater Kälteanlage;

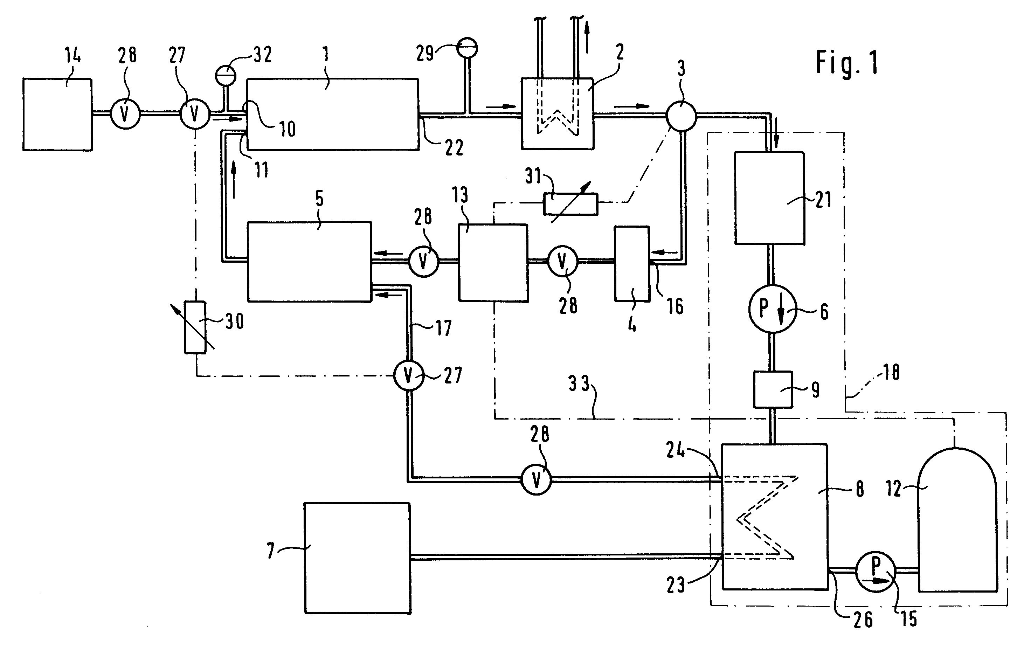

Nach der schematischen Darstellung in Figur 1 findet ein Verbrennungsprozeß unter Luftausschluß in der Verbrennungseinrichtung 1 bei Temperaturen zwischen 800 und 1000 °C statt. Der Verbrennungseinrichtung 1, beispielsweise einem Kraftwerk wird als Rohstoff bei Eingang 10 ein Brennstoff aus der Brennstoff-Versorgung 14, vorzugsweise ein Monobrennstoff, wie Erdgas, Deponiegas und/oder leichtes Heizöl und bei Eingang 11 ein oxidierendes Verbrennungsgas zugeführt. Die Brennstoff-Versorgung ist dabei über ein Schnellschlußventil 28 und ein Regelventil 27 mit der Verbrennungseinrichtung 1 verbunden. Brennstoff und oxidierendes Verbrennungsgas können dabei wahlweise vor oder in der Verbrennungseinrichtung 1 gemischt werden. Der Brennstoff wird dabei weitgehend stöchiometrisch verbrannt um hohe $CO_2$ - Konzentrationen im Rauchgas zu erhalten und Sauerstoffgehalte zu vermeiden. Das bei der Verbrennung des Brennstoffes entstehende Rauchgas strömt im Kreislauf 16 durch Wärmetauscher 2 und unter Beimischung von technisch erzeugtem Sauerstoff zu der Verbrennungseinrichtung 1 zurück.

In dem Wärmetauscher 2 wird das Rauchgas auf ca. 120°C heruntergekühlt unddas Kondensat abgeschieden. In Strömungsrichtung der Rauchgase ist nach dem Wärmetauscher 2 in dem Kreislauf 16 eine Regelklappe 3, ein Saugzug 4, ein Schnellschlußventil 28, eine Gasversorgung 13 für ein Gas mit einem $CO_2$-

Anteil größer/gleich 70%, insbesondere ein Rauchgas-Zwischenpuffer, ein Schnellschlußventil 28 sowie ein Mischer 5 angeordnet. Der Mischer 5 ist über Leitung 17, Schnellschlußventil 28 und Wärmetauscher 8, mit einer Sauerstoffversorgung 7 verbunden. Die Sauerstoffzerlegung ist ein Ausführungsbeispiel einer Luftzerlegungsanlage, die den technisch erzeugten Sauerstoff als tiefkalt verflüssigtes Gas zur Verfügung stellt. Der tiefkalt verflüssigte Sauerstoff strömt mit einer Temperatur von -150°C und -180°C in den Wärmetauscher 8 und wird unter Abgabe seiner Kälteenergie in die Gasphase überführt. Der mit einer Temperatur von z. B. 20°C aus dem Wärmetauscher 8 austretende gasförmige Sauerstoff tritt nach dem Rauchgas-Zwischenpuffer 13 in den Mischer 5 ein und bildet dort zusammen mit dem Rauchgas das der Verbrennungseinrichtung 1 zugeführte oxidierende Verbrennungsgas. Der für eine stöchiometrische Verbrennung benötigte Anteil des technisch erzeugten Sauerstoffs ist von der Rest-Sauerstoffkonzentration im Rauchgas nach der Verbrennung abhängig und wird dieser angepaßt. Dazu wird der Konzentrationswert des Sauerstoffs nach der Verbrennung über die Meßstelle 29 gemessen und als Information dem Lambda-Regler 30 zugeführt.

Der Lambda-Regler 30 erhält über Meßstelle 32 die Information über die Bennstoffmenge und bildet aus den Informationen Brennstoffmenge und Rest-Sauerstoffkonzentration nach der Verbrennung über Regelventil 27 die zuzuregelnde Sauerstoffmenge.

Das durch die Verbrennung entstehende Rauchgas wird zunächst im geschlossenen Kreislauf 16 geführt, bis sich in diesem Kreislauf vor der Verbrennung ein Rauchgasdruck von z. B. 1bar absolut aufgebaut hat. Wird dieser Druck überschritten, so wird die Regelklappe 3 mit Hilfe des Differenzdruck-Reglers 31 soweit geöffnet um das durch die Verbrennung kontinuierlich produzierte Überschuß-Rauchgas der Einrichtung 18 zur Verflüssigung zuzuführen.

Für den Anfahrvorgang ist im Kreislauf 16 der Rauchgas-Zwischenpuffer 13 angeordnet. Der Rauchgas-Zwischenpuffer 13 stellt für den Anfahrvorgang die zur Bildung des Verbrennungsgases benötigte Rauchgasmenge (stickstofffrei) zur Verfügung. Eine weitere vorteilhafte Ausbildung $CO_2$-Gas für den Anfahrvorgang (Verbrennungsbeginn) zur Verfügung zu stellen besteht in der Entnahme 33 des $CO_2$-flüssig aus dem Lagerbehälter 12 und dem anschließenden Verdampfen. Das $CO_2$-Gas wird dem Mischer 5 zugeführt und bildet zusammen mit dem Sauerstoff das Verbrennungsgas.

Zur energetisch optimalen Verflüssigung des Rauchgases mit dem aufkonzentrierten $CO_2$-Anteil von größer/gleich 70 % werden die aus der Regelklappe 3 entnommenen auf ca. 30°C abgekühlten, Wasserdampf enthaltenden Rauchgase in dem 2-stufigen Verdichter 6 auf ca. 15 bis 20 bar komprimiert.

In der ersten Stufe wird das Rauchgas auf ca. 4 bar komprimiert, die heißen Gase in einem Zwischenkühler wieder auf ca. 30°C abgekühlt. In der zweiten Stufe wird das Rauchgas auf den gewünschten Endwert von ca. 15 bis 20bar, vorzugsweise 18 bar, und die heißen Gase in einem Nachkühler wieder auf 30°C abgekühlt. Die Hauptwassermenge des Rauchgases wird in diesen Kühlem abgeschieden.

Der Verdichter 6 ist mit allen notwendigen jedoch nicht näher dargestellten Druckinstrumenten, Temperatur-Meßinstrumenten usw. ausgerüstet.

Das auf ca. 15 bis 20 bar komprimierte Rauchgas enthält noch Restfeuchte und eventuelle Rückstände. Im folgenden bildet ein Trockner 9 eine Reinigungs- und Trocknungsstufe.

Die letzte Verfahrensstufe des $CO_2$-Erzeugungsprozesses ist die Verflüssigung des Rauchgases. Der im Verdichter 6 stöchiometrisch bedingte Anteil des Rauchgases, der im Mischer 5 durch den Sauerstoff ersetzt wird, wird dem Wärmetauscher 8 über Eingang 25 als Verdampfungsmittel für den tiefkalt verflüssigten Sauerstoff zugeführt. Der vorzugsweise als Kältemittel eingesetzte tiefkalt verflüssigte Sauerstoff strömt mit einer Temperatur zwischen -150 und -180° C über Eingang 23 in den Wärmetauscher 8 und gibt seine Kälte an das Rauchgas ab. Das Kohlendioxid ($CO_2$) des Rauchgases hat eine Temperatur von 30 bis 40°C, einen Druck bon 15 bis 20 bar, eine Enthalpie h von 800 bis 820 kJ/kg. Für die Verflüssigung des gasförmigen $CO_2$ im Rauchgas wird mittels Wärmeaustausch im Wärmetauscher 8 eine Enthalpie von 430 bis 450 kJ/kg bei der Temperatur von -20°C bis -30°C und einen Druck von ca. 20 bar eingestellt.

Aus der Verbrennungsgleichung

$$CH_4 + 2O_2 \rightarrow CO_2 + 2H_2O$$

bei der stöchiometrischen Verbrennung aus 2 m$^3$ Sauerstoff ergibt sich 1m$^3$ Kohlendioxid, d. h. das mindeste Gewichtsverhältnis beträgt

$$X = kg\ O_2 / kg\ CO_2 \geq 1{,}45$$

Aus der Enthalpiebilanz für die Sauerstoffverdampfung in dem Wärmetauscher 8 ergibt sich eine spezifische Verdampfungswärme für den Sauerstoff von

$$400\ \frac{kJ}{kg\ O_2}$$

Aus einem Druck (P)-, Enthalpie (h)- Diagramm für Kohlendioxid (CO2) und spezifische Verdampfungswärme für Sauerstoff ergibt sich eine spezifische Mindestmenge von Sauerstoff zu $CO_2$ von

$$y = \frac{kg\ O_2}{kg\ Co_2} = 0{,}9 \text{ bis } 1{,}08$$

Ein Vergleich zwischen Wert X aus der Stöchiometrie und Y aus der Enthalpiebilanz ist ersichtlich, daß der Wert X>Y ist.

Das bedeutet, daß in dem Wärmetauscher 8 genügend Kälte für die Verflüssigung von $CO_2$ zur Verfügung steht.

Der Sauerstoff wird in dem Wärmetauscher 8 in die Gasphase überführt und strömt über Ausgang 24 zu dem Mischer 5. Der Anteil des Rauchgases der dem Kreislauf 16 entnommen und dem Wärmetauscher 8 zugeführt wird, wird bei einem Druck von ca. 18 bar auf Temperaturen von ca. -25 bis -30° C abgekühlt und tritt am Ausgang 26 als verflüssigtes $CO_2$ aus dem Wärmetauscher 8 aus.

Die Rauchgase können vor der Verflüssigung noch geringe Gehalte an Inertgasen enthalten, die durch keinen der vorgesehenen Reinigungsprozesse entfernt werden können. Der Wärmetauscher 8 ist daher mit einer Einrichtung zur Abscheidung dieser Inertgase ausgerüstet, die bei -25 bis -30° C nicht verflüssigt werden. Die Einstellung des Mengenstroms dieser Inertgase erfolgt einmalig während der ersten Inbetriebnahme unter Kontrolle der entsprechenden $CO_2$-Reinheit.

Das im Wärmetauscher 8 verflüssigte $CO_2$ wird einem Lagerbehälter 12 zugeführt. Im $CO_2$-Lagerbehälter 12 wird das flüssige $CO_2$ bei Temperaturen zwischen -20 und -30 °C und bei Drücken zwischen 14 bis 20 bar gelagert. Nach einer weiteren Ausführung, kann das $CO_2$ vor der Verflüssigung einem Verbraucher gasförmig zur Verfügung gestellt werden.

Enthalten die Rauchgase schwefelhaltige oder chlorhaltige Bestandteile werden diese in einem zwischen Regelklappe 3 und Verdichter 6 angeordneten Wäscher 21 entfernt. In dem Wäscher 21 werden die Schadstoffe des Rauchgases von einem Waschmittel gebunden und das Waschmittel und die Schadstoffe wieder voneinander getrennt.

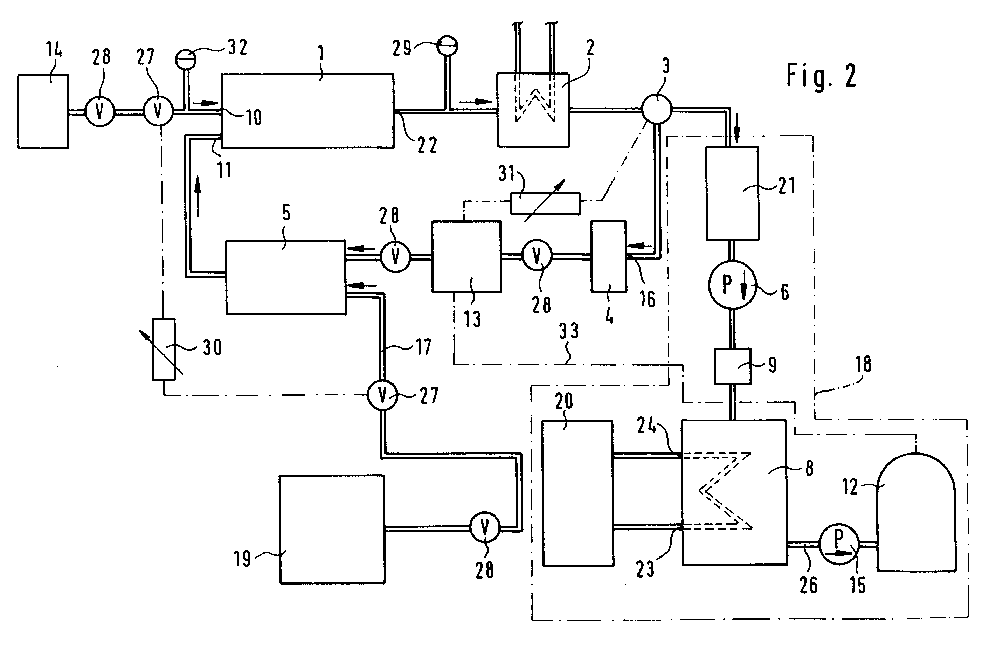

In Figur 2 ist ein Ausführungsbeispiel der Erfindung dargestellt, bei dem der technisch erzeugte Sauerstoff in einer On-site Anlage erzeugt wird. Gleichen Anlagenteilen sind in der Figur 2 gleiche Bezugsziffern zugeordnet. Der in einem Druckwecheladsorptions-Sauerstoff-Erzeuger oder in einem Membran-Sauerstoff-Erzeuger 19 hergestellte gasförmige Sauerstoff wird unterschiedlich zu der in Figur 1 beschriebenen Anlage direkt dem Mischer 5 zugeführt und in dem Mischer 5 mit dem Rauchgas gemischt. Der Verbrennungsprozeß und die RauchgasVerflüssigung läuft dabei wie vorstehend beschrieben ab. Dabei wir das für die Verflüssigung des Rauchgases benötigte Kältemittel über eine Kälteanlage 20 dem Wärmetauscher 8 zugeführt. Als Kältemittel werden Ammoniak, R 22 u. dgl. eingesetzt, die eine Kälteleistung von mindestens 370 bis 400kJ/kg $CO_2$ erbringen.

Grundsätzlich ist der zuvor beschriebene Verfahrensprozeß auch für Haus- und Sondermüllverbrennungsanlagen anwendbar. Allerdings müssen hierfür zusätzliche Rauchgasreinigungseinrichtungen berücksichtigt werden, da es sich bei den genannten Verbrennungsanlagen um heterogene Verbrennungsprozesse und damit um von der Schadstoffkonzentration dieses Rauchgases schwer zu prognostizierende Rauchgasfrachten handelt. In der Regel wird diesen Verbrennungsprozessen zur Abreinigung der verschiedensten Schadstoffe eine entsprechende Rauchgasreinigungsanlage zur Abscheidung dieser nach der Abhitzenutzung im Wärmetauscher zugeordnet.

Nach dem heutigen Stand der Technik gewährleisten diese die geforderten Grenzwerte der 17.BImschV und unterschreiten diese in verschiedenen Bereichen sogar erheblich. Danach könnte wie in Figur 1 und 2 beschrieben, ein Verflüssigungs-Equipment 18 zur $CO_2$-Verflüssigung zugeschaltet werden.

**Patentansprüche**

1. Verfahren zur Verringerung von Rauchgas bei Verbrennungsprozessen, vorzugsweise bei Verbrennungsprozessen unter Einsatz von Monobrennstoffen, wie Erdgas, Deponiegas und/oder leichtem Heizöl, die mit einem oxidierenden Verbrennungsgas durchgeführt werden, welches aus im Kreislauf rückgeführtem Rauchgas und technisch erzeugtem Sauerstoff gebildet wird und bei dem ein dem Verbrennungsgas nicht zugeführter, stöchiometrisch bedingter Anteil des Rauchgases einen aufkonzentrierten $CO_2$-Anteil von größer gleich 70 % aufweist, dadurch gekennzeichnet, daß der nicht als Verbrennungsgas zur Verbrennung rückgeführte Anteil des Rauchgases dem Kreislauf entnommen und verflüssigt wird.

2. Verfahren nach Anspruch 1 dadurch gekennzeichnet, daß das Rauchgas in einem Verdichter (6) auf 15 bis 20 bar komprimiert, anschließend in einem Trockner (9) getrocknet und danach in einem Wärmetauscher (8) auf Temperaturen zwischen -25 und -30 °C abgekühlt wird.

3. Verfahren nach Anspruch 1 oder 2 dadurch gekennzeichnet, daß dem Wärmetauscher (8) ein Kältemittel mit mindestens 370 bis 400 kJ/kg $CO_2$ zugeführt wird.

4. Verfahren nach einem der Ansprüche 1 bis 3 dadurch gekennzeichnet, daß der technische Sauerstoff als tiefkalt verflüssigtes Gas erzeugt und vor der Bildung des Verbrennungsgases dem Wärmetauscher (8) als Kältemittel zugeführt wird.

5. Verfahren nach einem der Ansprüche 1 bis 4 dadurch gekennzeichnet, daß der verflüssigte Sauerstoff im Wärmeaustausch mit dem Rauchgas in die Gasphase überführt und das Rauchgas unter Wärmeaustausch mit dem verflüssigten Sauerstoff in die Flüssigphase überführt wird.

6. Verfahren nach einem der Ansprüche 1 bis 3 dadurch gekennteichnet, daß der technische Sauerstoff durch Druckwechseladsorption oder Permeation erzeugt wird.

7. Anlage zur Durchführung des Verfahrens nach einem der Ansprüche 1 bis 6, mit einer Verbrennungseinrichtung (1) und einem Kreislauf (16), in welchem das Rauchgas zwischen dem Aus- (22) und Eingang (11) der Verbrennungseinrichtung (1) zirkuliert und mindestens im Rauchgaskreislauf (16) angeordnetem Saugzug (4) und Mischer (5), der mit einer Sauerstoffversorgung (7,19) verbunden ist, dadurch gekennzeichnet, daß der Kreislauf (16) eine Regelklappe (3) aufweist, welche mit einer Einrichtung (18) zur Verflüssigung des Rauchgases verbunden ist.

8. Anlage nach Anspruch 7, dadurch gekennzeichnet, daß die Einrichtung (18) einen Verdichter (6), einen Trockner (9) und einen Wärmetauscher (8) aufweist.

9. Anlage nach Anspruch 7 oder 8, dadurch gekennzeichnet, daß der eine Eingang (23) des Wärmetauschers (8) mit der Sauerstoffversorgung (17) und der Ausgang (24) mit dem Mischer (5) verbunden ist und der andere Eingang (25) mit der Regelstelle (3) und der Ausgang (26) mit einem Lagerbehälter (12).

10. Anlage nach einem der Ansprüche 7 bis 9, dadurch gekennzeichnet, daß zwischen der Regelklappe (3) und dem Verdichter (6) ein Wäscher (21) angeordnet ist.

11. Anlage nach Anspruch 7, 8, oder 10, dadurch gekennzeichnet, daß der Mischer (5) mit einem Druckwechseladsorptions-Sauerstoff-Erzeuger oder einem Membran-Sauerstoff-Erzeuger (19) verbunden ist.

12. Anlage nach einem der Ansprüche 7, 8, 10, oder 11, dadurch gekennzeichnet, daß der Wärmetauscher (8) mit einer Kälteanlage (20) verbunden ist.

13. Anlage nach Anspruch 7, dadurch gekennzeichnet, daß der Kreislauf (16) mit einer Gasversorgung, insbesondere mit einem Rauchgas-Zwischenpuffer (13) verbunden ist, der für Anfahrvorgänge ein mit einem $CO_2$-Anteil größer/gleich 70%, insbesondere

hochkonzentriertes $CO_2$-Rauchgas, bereitstellt.

Fig. 1

EP 0 761 281 A1

Fig. 2

**Europäisches Patentamt**

# EUROPÄISCHER RECHERCHENBERICHT

Nummer der Anmeldung

EP 96 11 2406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | ENERGY CONVERSION AND MANAGEMENT, Bd. 37, Nr. 6/08, 1.Juni 1996, Seiten 903-908, XP000555883 SHAO Y ET AL: "POWER PLANTS WITH CO2 CAPTURE USING INTEGRATED AIR SEPARATION AND FLUE GAS RECYCLING" * das ganze Dokument * --- | 1,3-5 | B01D53/00 F25J1/02 F23L7/00 |
| X | EP 0 503 910 A (AIR PROD & CHEM) 16.September 1992 * Seite 3, Zeile 18 - Seite 5, Zeile 42; Abbildungen 1,2 * | 1-5 | |
| Y | --- | 6-11 | |
| X | DATABASE WPI Section Ch, Week 9213 Derwent Publications Ltd., London, GB; Class E36, AN 92-102594 XP002020649 & JP 04 048 185 A (MITSUBISHI HEAVY IND KK) , 18.Februar 1992 * Zusammenfassung * --- | 1 | |
| Y | DE 94 14 301 U (SBW SONDERABFALLENTSORGUNG BAD ;BERLIN CONSULT GMBH (DE)) 2.Februar 1995 * Seite 11, Absatz 2 - Seite 14, Absatz 3; Abbildung 1 * --- | 7-10 | RECHERCHIERTE SACHGEBIETE (Int.Cl.6) B01D F25J F23L |
| Y | WO 94 01724 A (BAL AB ;ALMLOEF G (SE); LILLIEHOEOEK FOLKE (SE)) 20.Januar 1994 * Seite 5, Zeile 1 - Seite 6, Zeile 4; Abbildung 1 * --- | 6,11 | |

-/--

Der vorliegende Recherchenbericht wurde für alle Patentansprüche erstellt

| Recherchenort | Abschlußdatum der Recherche | Prüfer |
|---|---|---|
| DEN HAAG | 9.Dezember 1996 | Eijkenboom, A |

Europäisches
Patentamt

**EUROPÄISCHER RECHERCHENBERICHT**

Nummer der Anmeldung

EP 96 11 2406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 008, no. 178 (C-238), 16.August 1984 & JP 59 073416 A (ISHIKAWAJIMA HARIMA JUKOGYO KK), 25.April 1984, * Zusammenfassung * | 1-3,7-12 | |
| A | US 4 822 394 A (ZEIGLER JOSEPH E ET AL) 18.April 1989 * Spalte 5, Zeile 20 - Spalte 6, Zeile 52; Abbildungen 1-3 * | 1-5,7-9 | |

RECHERCHIERTE
SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 9.Dezember 1996 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument

EPO FORM 1503 03.82 (P04C03)